# EUROPEAN PATENT APPLICATION

(11) **EP 0 639 612 A1**
(43) Date of publication of application: **22.02.1995**
(21) Application number: 94112852.2
(22) Date of filing: 17.08.1994
(51) Int. Cl.: C08K 5/35, C08L 67/02

(54) **High viscosity polyester compositions**

(30) Priority: 19.08.1993 IT MI931833
(71) Applicant: ENICHEM S.p.A., I-20124 Milano (IT); ENIRICERCHE S.p.A., I-20097 S. Donato Milanese (Milano) (IT)
(72) Inventor: Cardi, Nicoletta, I-21057 Olgiate Olona (VA) (IT); Po, Riccardo, I-28100 Novara (IT); Morelli, Gian Battista, I-28015 Momo (NO) (IT); Giannotta, Giorgio, I-20124 Milano (IT); Occhiello, Ernesto, I-28100 Novara (IT)
(74) Representative: Weinhold, Peter, Dr.

(57) **Abstract**

Polyester compositions with a high viscosity in the molten state obtainable by the reaction at high temperature of a polyester resin, previously dried, with at least one polycarboxylic anhydride and at least one compound having the general formula (I): 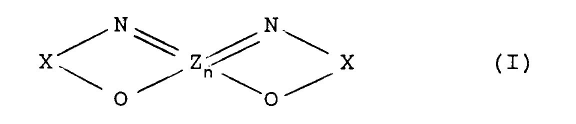
wherein X represents a divalent organic radical selected from those having the formula -CR₁R₂-CR₃R₄- or -CR₁R₂-CR₃R₄-CR₅R₆- with R₁, R₂, R₃, R₄, R₅ and R₆, the same or different, representing a hydrogen atom or methyl; n is zero or 1; Z represents an aliphatic bivalent radical, linear or branched, or cyclic, containing of from 1 to 16 carbon atoms and, optionally, hetero-atoms such as oxygen, sulphur or nitrogen, or Z represents an aromatic or alkylaromatic radical containing from 6 to 20 carbon atoms.

## Description

The present invention relates to polyester compositions with a high viscosity.

More specifically the present invention relates to polyester compositions with a high viscosity in the molten state, a high molecular weight and reduced content of carboxylic groups and the process for their preparation.

Thermoplastic polyesters, in particular polyethyleneterephthalate, polybutyleneterephthalate, etc., are materials which have been used for a long time in the production of fibres, films, hollow containers, molded articles etc. with conventional transformation processes such as injection blowing, injection molding, extrusion, spinning, etc. It is known, however, that these products have several disadvantages when used, for example, in extrusion-blowing processes or foam production, owing to the insufficiently high viscosity in the molten state.

In the case of extrusion-blowing, the low viscosity in fact causes the material to drip in the transformation machine making the production of hollow containers difficult.

In the preparation of foams the low viscosity of the molten polymer does not allow holding of the gas released by the foaming agent and causes the collapsing of the foam.

One of the methods proposed to avoid these disadvantages consists in using polyfunctional compounds (so-called chain extenders) capable of reacting with the chain-ends of the polyester and thus developing partially cross-linked structures which cause an increase in the viscosity of the molten product. In literature there are patents and patent applications which describe the use of pyromellitic anhydride which is capable of reacting with the hydroxylic chain ends of polyester. Examples are: international patent application publication WO 90/10.667; European patent EP 372.846; Japanese patent applications 59/210.955, 74/85.142 and 04/45.132; European patent 442.759; German patents 2.837.846 and 3.244.371; English patent 2.247.687, etc.

During the chain extension reaction with pyromellitic anhydride reaction with the hydroxylic chain ends of the polymer leads to opening of the anhydride rings and the formation of free carboxylic groups directly bound to the benzenic ring. The carboxylic groups thus formed can produce a transesterification reaction with the chain of the polyester causing a partial branching/cross-linking of the polymer. In addition, carboxylic chain ends are already present in the polyester from the start and owing to thermomechanical degradation their number tends to increase during the transformation processes. These carboxylic groups have a self-catalytic activity in the hydrolytic degradation of the ester groups of the polyester, as described by H. Zimmermann and N.T. Kim in Polymer Engineering Science, 20, 680 (1980), and slow down the regradation process (polymerization in the solid state). It is therefore convenient to use compounds capable of reacting with the carboxylic chain ends.

In the Japanese patent application publication 74/85.142 compounds containing epoxy and/or isocyanate groups are used for this purpose.

The Applicants have now found that it is possible to prepare polyester compositions with a high viscosity in the molten state by mixing at a high temperature a polyester resin, a polycarboxylic anhydride and an organic compound containing two oxazolinic or dihydroxazinic rings. This polyester composition also has the advantage of having a lower content of carboxylic groups than the composition which does not contain the oxazolinic or dihydroxazinic derivative.

The present invention therefore relates to polyester compositions with a high viscosity in the molten state obtainable by the reaction at a high temperature of a polyester resin, previously dried, with at least one polycarboxylic anhydride and at least one compound having general formula (I): 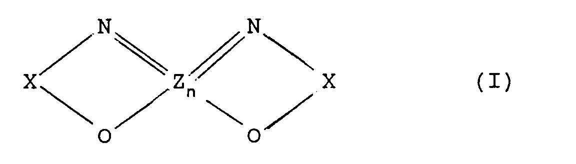
wherein X represents a divalent organic radical
selected from those having the formula -CR₁R₂-CR₃R₄- or -CR₁R₂-CR₃R₄-CR₅R₆-, with R₁, R₂, R₃, R₄, R₅ and R₆, the same or different, representing hydrogen atom or methyl; n is zero or 1; Z represents an aliphatic bivalent radical, linear or branched, or cyclic, containing of from 1 to 16 carbon atoms and, optionally, hetero-atoms such as oxygen, sulphur or nitrogen, or Z represents an aromatic or alkylaromatic radical containing from 6 to 20 carbon atoms.

The compounds having general formula (I) are known products and can be prepared according to what is described by R.H. Wiley, L.L.Bennet, in "Chemical Review", 44, 447, (1949).

Examples of compounds having general formula (I) which are particularly suitable for the preparation of the polyester compositions of the present invention are:
2,2'-(1,4-phenylene)-bis(5,6-dihydro-4H-1,3-oxazine);
2,2'-(tetramethylene)-bis(5,6-dihydro-4H-1,3-oxazine);
2,2'-bis(5,6-dihydro-4H-1,3-oxazine);
2,2'-(1,4-phenylene)-bis(2-oxazoline);
2,2'-(1,3-phenylene)-bis(2-oxazoline);
2,2'-(tetramethylene)-bis(2-oxazoline);
2,2'-bis(2-oxazoline);
2,2'-(1,4-phenylene)-bis(4,4-dimethyl-2-oxazoline);
2,2'-(1,3-phenylene)-bis(4,4-dimethyl-2-oxazoline);
2,2'-(tetramethylene)-bis(4,4-dimethyl-2-oxazoline);
2,2'-bis(4,4-dimethyl-2-oxazoline);
2,2'(1,4-phenylene)-bis(5-methyl-2-oxazoline);
2,2'-(1,3-phenylene)-bis(5-methyl-2-oxazoline);
2,2'-(tetramethylene)-bis(5-methyl-2-oxazoline);
2,2'-bis(5-methyl-2-oxazoline); etc.

The quantity of the reagent of formula (I) used is between 0.01 and 10% by weight with respect to the total weight of the mixture, preferably between 0.05 and 2%.

Preferred polycarboxylic anhydrides according to the present invention are those which are aliphatic or aromatic and illustrative examples comprise: pyromellitic anhydride, perylenetetracarboxylic anhydride, cyclohexanetetracarboxylicanhydride, naphthalenetetracarboxylic anhydride, bicyclo[2.2.2]-octane-2,3,5,6-tetracarboxylic anhydride, benzophenontetracarboxylic anhydride, etc. Among these, pyromellitic anhydride is preferred.

The quantity of anhydride used is between 0.01 and 5% by weight with respect to the total weight of the mixture, preferably between 0.05 and 2%.

The polyester resin used in the present invention preferably is a linear saturated polyester resin such as for example polyethyleneterephthalate, polybutyleneterephthalate, polyethylene-2,6-naphthalenedicarboxylate, etc, or their mixtures. The most preferred polyester resin is polyethyleneterephthalate (PET).

It is also possible to use a recycled polyethyleneterephthalate obtained from sorted recycling material for example from a post-consumer soft drink bottles collection.

A suitable procedure for the preparation of the polyester compositions having a high viscosity in the molten state comprises:
i) drying a polyester resin under vacuum at a temperature of between 80 and 200°C;
ii) dry mixing of the polyester resin thus treated with at least one compound having general formula (I) and with at least one polycarboxylic anhydride;
iii) heating the mixture (ii) to a high temperature under continual stirring;
iv) cooling the product thus obtained to room temperature.

The operation of step (iii) preferably takes place at temperatures at which the polyester resin is in the molten state, for example between 250 and 330°C.

In accordance with a preferred embodiment of the present procedure both the cold mixing (ii) and hot mixing (iii) steps and also the cooling step (iv) can be carried out in a single equipment, for example a single or twin-screw extruder equipped with a pelletizing apparatus.

The polyester compositions of the present invention can be used not only for the production of moulded articles (which can be prepared with the conventional technologies for the transformation of thermoplastic polymers, such as, for example, injection moulding or extrusion) and films or fibres, but also for the production of foams or hollow containers by means of extrusion-blowing. These modified polyesters can be used as matrices for composite materials based on fibres or inorganic fillers. Finally, they can also be used in admixture with other thermoplastic polymers or elastomers to improve the mechanical properties.

The examples which follow are purely illustrative and do not limit the invention in any way.

For the modification reaction a counter-rotating twin-screw extruder Rheomex TW-100-Haake System 90 was used, with tapered screws (diameter 20-31 mm, L=330 mm) with four heating zones and a die of 3 mm in diameter.

The flow rate of the fed polymer was 1 kg/hr. The number of revs was regulated at 70 rpm. The thermal profile was between 250 and 300°C. The polymer was cooled in a water cooling tank and granulated.

The viscosity measurements of the molten product were carried out under isothermal conditions (280°C), using a Gottfert Rheograph 2002 rheometer with a die of 1 mm in diameter and 20 mm in length. The viscosity value shown was measured at a shear rate of 100 1/s.

The -COOH groups were determined by dissolving 500 mg of polymer in 50 ml of 1-methylnaphthalene at the boiling point. The polymer precipitated on cooling to room temperature, was filtered, redissolved in a mixture of o-cresol/chloroform and the solution was titrated with methylalcoholic potassium hydroxide.

### COMPARATIVE EXAMPLE 1

2000 g of polyethyleneterephthalate (PET) were dried for 4 hours at 180°C, mixed with 14.6 g of pyromellitic anhydride (PMDA) and fed to the extruder. A product was obtained with the characteristics shown in Table 1.

### EXAMPLE 1

2000 g of PET, 13.8 g of PMDA, 21.6 g of 2,2'-(1,4-phenylene)-bis-(2-oxazoline) were treated and reacted according to the procedure described in comparative example 1. A product was obtained whose characteristics are shown in Table 1.

### COMPARATIVE EXAMPLE 2

2000 g of PET, 7.3 g of PMDA were treated according to the procedure described in comparative example 1. A product was obtained characterized as in Table 1.

### EXAMPLE 2A

2000 g of PET, 7.3 g of PMDA, 10.9 g of 2,2'-(1,4-phenylene)-bis-(2-oxazoline) were treated and reacted according to the procedure described in comparative example 1. A product was obtained whose characteristics are shown in Table 1.

### EXAMPLE 2B

1492 g of PET, 6.0 g of PMDA, 2.0 g of 2,2'-(1,4-phenylene)-bis-(2-oxazoline) were treated and reacted according to the procedure described in comparative example 1. A product was obtained whose characteristics are shown in Table 1.

### EXAMPLE 2C

1490 g of PET, 6.0 g of PMDA, 4.0 g of 2,2'-bis-(2-oxazoline) were treated and reacted according to the procedure described in comparative example 1. A product was obtained whose characteristics are shown in Table 1.

### COMPARATIVE EXAMPLE 3

1000 g of recycled PET, mainly bottles of PET coming from a sorted collection, 4.8 g of PMDA were treated according to the procedure described in comparative example 1. A product was obtained characterized as in Table 2.

### EXAMPLE 3

1000 g of recycled PET, 4.8 g of PMDA, 9.6 g of 2,2'-(1,4-phenylene)-bis-(2-oxazoline) were treated and reacted according to the procedure described in comparative example 1. A product was obtained whose characteristics are shown in Table 2.

### COMPARATIVE EXAMPLE 4

2000 g of recycled PET, 7.0 g of PMDA were processed according to the procedure described in comparative example 1. A product was obtained characterized as in Table 2.

### EXAMPLE 4A

2000 g of recycled PET, 7.0 g of PMDA, 9.6 g of 2,2'-(1,4-phenylene)-bis-(2-oxazoline) were treated and reacted according to the procedure described in comparative example 1. A product was obtained whose characteristics are shown in Table 2.

### EXAMPLE 4B

2000 g of recycled PET, 7.0 g of PMDA, 4.0 g of 2,2'-(1,4-phenylene)-bis-(2-oxazoline) were treated and reacted according to the procedure described in comparative example 1. A product was obtained whose characteristics are shown in Table 2.

### EXAMPLE 5

1495 g of recycled PET, 3.0 g of PMDA, 2.0 g of 2,2'-(1,4-phenylene)-bis-(2-oxazoline) were treated and reacted according to the procedure described in comparative example 1. A product was obtained whose characteristics are shown in Table 1.

**TABLE 1**

| **(PET)** | | | | | |
|---|---|---|---|---|---|
| Example | (I) | PMDA (%wt) | Ox (%wt) | Melt viscosity (Pa s) | COOH (meq/Kg) |
| com.1 | - | 0.72 | - | 2580 | 87 |
| 1 | PBO | 0.68 | 1.06 | 3070 | 55 |
| com.2 | - | 0.36 | - | 850 | 68 |
| 2 | PBO | 0.36 | 0.54 | 970 | 31 |
| 2b | PBO | 0.36 | 0.13 | 740 | 52 |
| 2c | BO | 0.36 | 0.27 | 1150 | 35 |
| 5 | PBO | 0.20 | 0.13 | 410 | 37 |
| Note: PBO = 2,2'-(1,4-phenylene)-bis(2-oxazoline) BO = 2,2'-bis(2-oxazoline) | | | | | |

**TABLE 2**

| **(recycled PET)** | | | | | |
|---|---|---|---|---|---|
| Example | (I) | PMDA (%wt) | Ox (%wt) | Melt viscosity (Pa s) | COOH (meq/Kg) |
| com.3 | - | 0.5 | - | 870 | 81 |
| 3 | PBO | 0.5 | 1.0 | 1020 | 34 |
| com.4 | - | 0.25 | - | 550 | 71 |
| 4a | PBO | 0.25 | 0.25 | 660 | 53 |
| 4b | PBO | 0.25 | 0.5 | 920 | 68 |
| Note: PBO = 2,2'-(1,4-phenylene)-bis(2-oxazoline) BO = 2,2'-bis(2-oxazoline) | | | | | |

## Claims

1. Polyester compositions with a high viscosity in the molten state obtainable by the reaction at high temperature of a polyester resin, previously dried, with at least one polycarboxylic anhydride and at least one compound having the general formula (I): 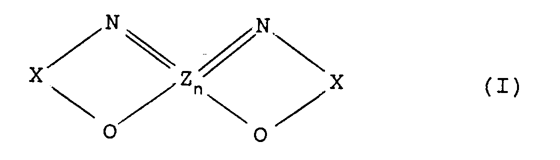 wherein X represents a divalent organic radical selected from those having the formula -CR₁R₂-CR₃R₄- or -CR₁R₂-CR₃R₄-CR₅R₆-with R₁, R₂, R₃, R₄,R₅ and R₆, the same or different, representing a hydrogen atom or methyl; n is zero or 1; Z represents an aliphatic bivalent radical, linear or branched, or cyclic, containing of from 1 to 16 carbon atoms and, optionally, hetero-atoms such as oxygen, sulphur or nitrogen, or Z represents an aromatic or alkylaromatic radical containing from 6 to 20 carbon atoms.

2. Compositions according to claim 1, wherein the quantity of the reagent of formula (I) used is between 0.01 and 10% by weight with respect to the total weight of the mixture.

3. Compositions according to claims 1 or 2, wherein the quantity of anhydride used is between 0.01 and 5% by weight with respect to the total weight of the mixture.

4. Compositions according to any one of the previous claims, wherein the polyester resin is a linear saturated resin such as polyethyleneterephthalate, polybutyleneterephthalate, polyethylene-2,6-naphthalenedicarboxylate or their mixtures or recycled polyethyleneterephthalate obtained from sorted recycling material.

5. Process for the preparation of the polyester compositions with a high viscosity in the molten state according to any one of the preceding claims comprising:
i) drying a polyester resin under vacuum at a temperature of between 80 and 200°C;
ii) dry mixing of the polyester resin thus treated with at least one compound having general formula (I) and with at least one polycarboxylic anhydride;
iii) heating the mixture (ii) to a high temperature under continual stirring;
iv) cooling the product thus obtained to room temperature.

6. Process according to claim 5, wherein the operation of step (iii) takes place at temperatures at which the polyester resin is in the molten state.

7. Process according to claims 5 or 6, wherein both the mixing steps at room temperature (ii) and under heat (iii) and the cooling step (iv) are carried out in an extruder.

8. Use of the polyester compositions according to any one of the previous claims for the production of moulded articles, films or fibres, for the production of foams and hollow containers by extrusion-blowing, as matrices for composite materials based on inorganic fibres or fillers and mixed with other thermoplastic polymers or with elastomers.
